# EUROPEAN PATENT APPLICATION

(11) **EP 2 320 496 A1**
(43) Date of publication of application: **11.05.2011**
(21) Application number: 10776071.2
(22) Date of filing: 15.06.2010
(51) Int. Cl.: H01M 2/26, H01M 4/64, H01M 10/04, H01M 10/0587

(54) **WINDING ELECTRODE GROUP AND BATTERY**

(30) Priority: 30.06.2009 JP 2009155595
(71) Applicant: Panasonic Corporation, Kadoma-shi Osaka 571-8501 (JP)
(72) Inventor: UEDA, Tomohiro, Osaka 540-6207 (JP); SANO, Yoko, Osaka 540-6207 (JP)
(74) Representative: TBK-Patent
(86) International application number: PCT/JP2010/003946
(87) International publication number: WO 2011/001617

(57) **Abstract**

A wound electrode assembly 12 includes a columnar conductive winding core 14, a negative electrode sheet 15, a positive electrode sheet 16, a separator 17 interposed between the negative electrode sheet 15 and the positive electrode sheet 16, and a conductive winding core 14 having a first flat portion 20 to which an exposed portion 26 of the negative electrode sheet 15 is joined. An edge 28 of the conductive winding core 14 is not positioned on the surface of a curved portion 18, but is positioned inside a circle 23 with a predetermined radius in the radial direction of the conductive winding core 14. Joints 27 of the first flat portion 20 and the exposed portion 26 are positioned inside the circle 23 with the predetermined radius in the radial direction of the conductive winding core 14.

## Description

### [Technical Field]

This invention relates to an improvement in the structure of a conductive winding core for use in a wound electrode assembly in which a positive or negative electrode current collector plate is connected to a conductive winding core.

### [Background Art]

A wound electrode assembly, comprising a positive electrode and a negative electrode which are wound with a separator interposed therebetween, is suitable for reducing battery size, since the opposing area of the positive electrode and the negative electrode per unit volume is large.

PTLs 1 and 2, shown below, disclose cylindrical lithium ion batteries including: a negative electrode comprising a negative electrode substrate serving as a current collector plate and a negative electrode active material supported on a surface of the negative electrode substrate; a positive electrode; a separator disposed between the negative electrode and the positive electrode; and a conductive winding core. The negative electrode, the positive electrode, and the separator are wound around the conductive winding core to form a wound electrode assembly. In the wound electrode assembly, the negative electrode substrate has a substrate-exposed portion, where the negative electrode active material is not supported, at the end portion to be wound. Also, the substrate-exposed portion is spot welded to the conductive winding core at two or more locations along the longitudinal direction of the conductive winding core, so that it is directly connected to the conductive winding core.

In such a wound electrode assembly, the conductive winding core serves as a lead for connecting the negative electrode to an external terminal, and, in addition, the conductive winding core itself serves as the external terminal. It thus becomes possible to decrease the number of parts and contribute to further size reduction. Also, since the conductive winding core serving as the external terminal is directly connected to the negative electrode, a high output can be easily obtained, the current-collecting structure of the negative electrode becomes simple, and the production process becomes easy.

### [Citation List]

### [Patent Literatures]

[PTL 1] Japanese Laid-Open Patent Publication No. 2005-85556
[PTL 2] Japanese Laid-Open Patent Publication No. 2008-243704

### [Summary of Invention]

### [Technical Problem]

However, according to the structure of the above-described wound electrode assembly, the conductive winding core and the negative electrode substrate are joined by welding to form protrusions at the joints, which may locally exert an excessive pressure to the negative electrode, the positive electrode, and the separator which are wound around the conductive winding core. Such local, excessive pressure can cause the active material to be separated from the negative electrode substrate and the positive electrode substrate, or can cause the separator to break. Also, the welded joints of the conductive winding core and the negative electrode substrate tend to have burrs. Thus, when the diameter of the conductive winding core is decreased to reduce battery size, the separation of the active material and the breakage of the separator become more evident. The separation of the active material layer from the negative electrode and the positive electrode can decrease battery capacity, and the breakage of the separator can cause an internal short-circuit.

An object of the invention is to suppress the separation of the active material layer and the breakage of the separator in a wound electrode assembly in which a positive or negative electrode current collector plate is directly connected to a conductive winding core, while reducing the size of the wound electrode assembly.

### [Solution to Problem]

A wound electrode assembly in one aspect of the invention includes:
a positive electrode sheet including a positive electrode current collector sheet and a positive electrode active material layer supported on a surface of the positive electrode current collector sheet;
a negative electrode sheet including a negative electrode current collector sheet and a negative electrode active material layer supported on a surface of the negative electrode current collector sheet;
a separator interposed between the positive electrode sheet and the negative electrode sheet; and
a columnar conductive winding core around which a laminate of the positive electrode sheet, the negative electrode sheet, and the separator is wound. The surface of the positive electrode sheet or the negative electrode sheet has an exposed portion, where the active material layer is not supported, at an end portion on the winding center side. The outer shape of the conductive winding core in cross-section includes: a first flat portion having such a shape that a part of a circle with a predetermined radius is cut; and a curved portion extending continuously from the first flat portion along the circle. The exposed portion is joined to the first flat portion at a plurality of locations along the axial direction of the conductive winding core. An edge of the exposed portion is positioned on the first flat portion side inside the circle.

A battery in another aspect of the invention includes a substantially cylindrical battery case with a dosed end;
the above-described wound electrode assembly contained in the battery case; and a non-aqueous electrolyte contained in the battery case.

### [Advantageous Effects of Invention]

According to the invention, in a wound electrode assembly in which a positive or negative electrode current collector plate is directly connected to a conductive winding core, the separation of the active material layer from the current collector plate and the breakage of the separator can be suppressed. Also, it is possible to provide a battery which is compact but has a sufficient capacity, and which is unlikely to cause an internal short-circuit.

### [Brief Description of Drawings]

FIG. 1 is a half sectional view schematically showing a pin-shaped lithium ion battery in an embodiment;
FIG. 2 is a cross-sectional view schematically showing a wound electrode assembly in an embodiment; and
FIG. 3 is a schematic view showing an example of a method for joining a conductive winding core and a current collector sheet.

### [Description of Embodiment]

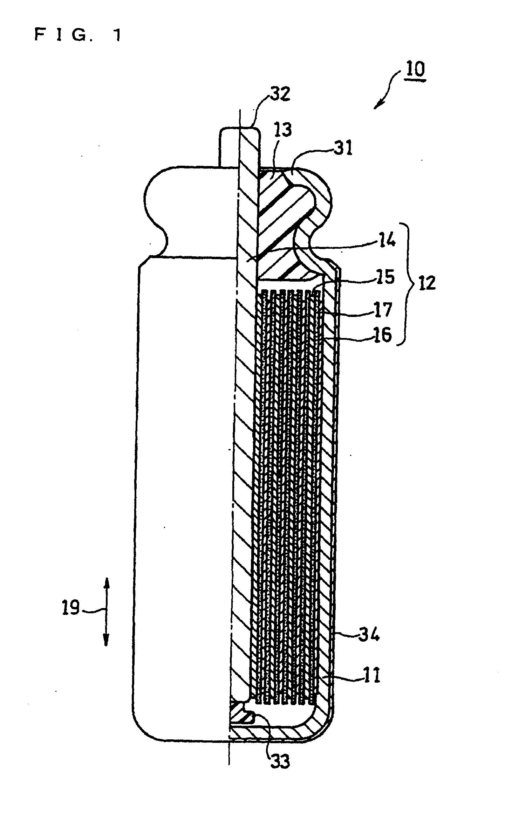

An embodiment of the invention is hereinafter described in details, taking a pin-shaped lithium ion battery as an example.
Referring to FIG. 1, a lithium ion battery 10 includes: a substantially cylindrical battery case 11; a wound electrode assembly 12 and a non-aqueous electrolyte which are housed in the battery case 11; and an insulating gasket 13 for sealing the battery case 11. The wound electrode assembly 12 includes a columnar conductive winding core 14, a negative electrode sheet 15, a positive electrode sheet 16, and a separator 17 for separating the negative electrode sheet 15 from the positive electrode sheet 16. In the wound electrode assembly 12, a laminate of the negative electrode sheet 15, the positive electrode sheet 16, and the separator 17 is spirally wound around the columnar conductive winding core 14.

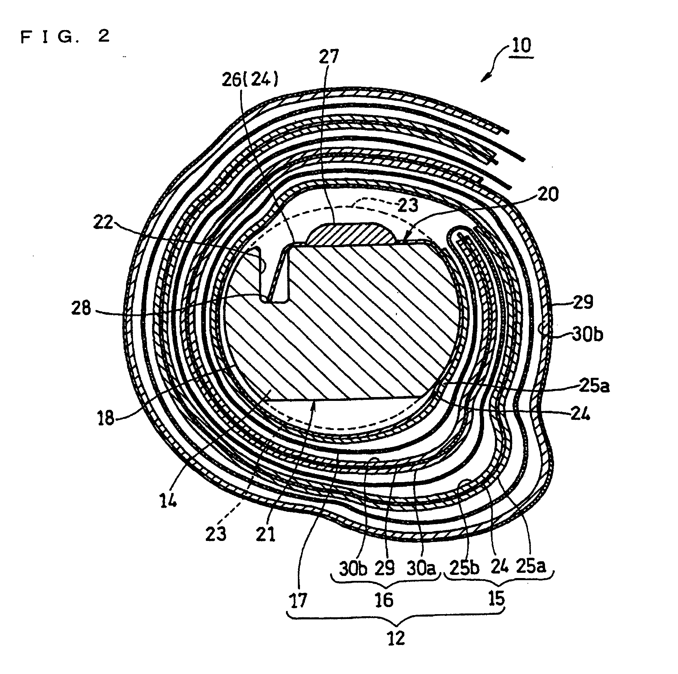

Referring to FIG. 2, the outer shape of the conductive winding core 14 in cross-section includes: a curved portion 18 along a circle 23 with a predetermined radius; a first flat portion 20 having such a shape that a part of the circle 23 with the predetermined radius is cut; and a second flat portion 21 having such a shape that a part of the circle 23 with the predetermined radius is cut, the second flat portion 21 being opposite to the first flat portion 20. The first flat portion 20 and the second flat portion 21 are connected to the curved portion 18. In FIG. 2, in order to show the structure of the wound electrode assembly 12, the negative electrode sheet 15, the positive electrode sheet 16, and the separator 17 are illustrated as being partially slackened.

The negative electrode sheet 15 comprises a negative electrode current collector sheet 24, and negative electrode active material layers 25a and 25b formed on both sides of the negative electrode current collector sheet 24. The negative electrode current collector sheet 24 has an exposed portion 26, where the negative electrode active material layer is not formed and the negative electrode current collector sheet 24 is exposed, at an end portion to be wound around the conductive winding core 14. The negative electrode sheet 15 and the conductive winding core 14 are electrically connected by joining the exposed portion 26 of the negative electrode current collector sheet 24 to the surface of the first flat portion 20 of the conductive winding core 14. The exposed portion 26 and the surface of the first flat portion 20 are joined at a plurality of locations by resistance welding. At each of the joined locations is a joint 27 which protrudes outwardly in the radial direction of the conductive winding core 14 from the surface of the exposed portion 26.

The positive electrode sheet 16 comprises a positive electrode current collector sheet 29 and positive electrode active material layers 30a and 30b formed on both sides of the positive electrode current collector sheet 29. The positive electrode sheet 16 is wound around the negative electrode sheet 15 wound around the circumference of the conductive winding core 14, with the separator 17 interposed threrebetween.

The conductive winding core 14 can be a core member made of copper, a copper alloy, stainless steel, nickel, titanium, or the like. As described below, the electrode sheet to be joined to the conductive winding core 14 may be a positive electrode sheet. In this case, the conductive winding core 14 can be made of aluminum, an aluminum alloy, stainless steel, titanium, or the like.

The diameter of the conductive winding core 14 can be set as appropriate, in view of the battery size, the strength of the conductive winding core 14, the machinability thereof, etc. While the largest diameter of the curved portion 18 is not particularly limited, it is preferably 0.5 to 50 mm, and more preferably 0.5 to 10 mm, in terms of reducing the battery size. Also, in the case of producing a pin-shaped battery, in particular, the largest diameter of the curved portion 18 is preferably 0.5 to 6 mm, and more preferably 1 to 4 mm.

In the wound electrode assembly 12, the joints 27 and an edge 28 of the exposed portion 26 of the negative electrode current collector sheet 24 are positioned inside the circle 23 with the predetermined radius when viewed in a cross-section of the conductive winding core 14. The circle 23 with the predetermined radius partially overlaps the curved portion 18. This structure can suppress the joints 27 and the edge 28 from coming into contact with the negative electrode sheet 15, the positive electrode sheet 16, and the separator 17 which are wound around the conductive winding core 14. Thus, even when the diameter of the conductive winding core 14 is decreased to reduce battery size, it is possible to suppress the joints 27 and the edge 28 from locally exerting an excessive pressure to the negative electrode sheet 15, the positive electrode sheet 16 and the separator 17. Also, the above structure can suppress the separation of the negative electrode active material layers 25a and 25b from the surfaces of the negative electrode current collector sheet 24 and the breakage of the separator 17. It is thus possible to suppress the decrease of the battery capacity and the occurrence of an internal short-circuit and enhance the battery reliability.

The shape of the first flat portion 20 is not particularly limited if the joints 27 and the edge 28 can be positioned inside the circle 23 with the predetermined radius. The shape of the first flat portion 20 when viewed in a cross-section of the conductive winding core 14 may curve outward in the radial direction of the conductive winding core 14 if the joints 27 and the edge 28 can be positioned within the circle 23 with the predetermined radius. Also, it may curve inward in the radial direction of the conductive winding core 14. The size of the first flat portion 20 is not particularly limited. The width of the first flat portion 20 orthogonal to an axial direction 19 is preferably set to about 1 to 4 mm, considering that the joints 27 formed by resistance welding such as spot welding may have a diameter of approximately 1 mm or more, and that the largest diameter of the curved portion 18 of the conductive winding core 14 is set in the above-mentioned range to reduce battery size.

The first flat portion 20 can be formed, for example, by casting the conductive winding core 14 using a mold which has a portion corresponding to the first flat portion 20. Also, the first flat portion 20 may be formed by cutting off a part of the circumference of the columnar conductive winding core.

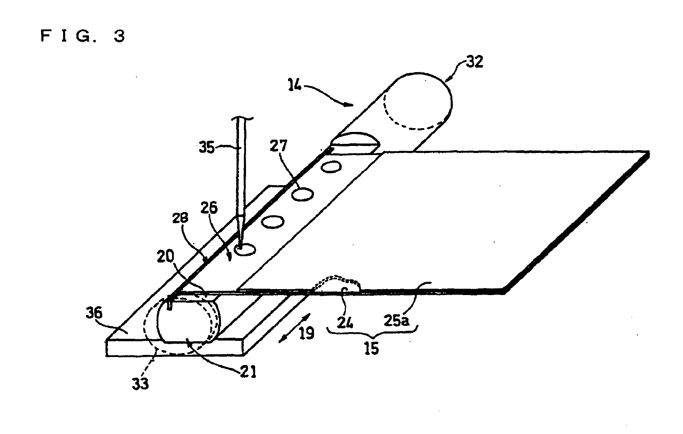

The exposed portion 26 of the negative electrode current collector sheet 24 and the first flat portion 20 of the conductive winding core 14 can be joined, for example, by resistance welding such as spot welding. Specifically, referring to FIG. 3, the exposed portion 26 of the negative electrode current collector sheet 24 is placed on the first flat portion 20 of the conductive winding core 14, and the conductive winding core 14 is disposed on a second resistance-welding electrode 36 shaped like a flat plate. Therein, the second flat portion 21 of the conductive winding core 14 is brought into contact with the second resistance-welding electrode 36. Subsequently, the tip of a needle-like first resistance-welding electrode 35 is brought into contact with the exposed portion 26, and a current is applied between the first resistance-welding electrode 35 and the second resistance-welding electrode 36. As a result, the joint 27 is formed at the location to which the current is applied, so that the exposed portion 26 and the conductive winding core 14 are joined. The operation of applying a current between the resistance-welding electrodes 35 and 36 is repeated at a plurality of locations in the axial direction 19 of the conductive winding core 14. Due to the formation of the joints 27 at the plurality of locations along the axial direction 19 of the conductive winding core 14, the bonding strength between the exposed portion 26 and the conductive winding core 14 is increased.

Referring again to FIG. 2, the surface of the first flat portion 20 has a groove 22 which extends in the axial direction 19. The edge 28 of the negative electrode current collector sheet 24 is disposed in the groove 22. The negative electrode current collector sheet 24 is usually a metal foil as described below, and its edge is sharp. Hence, if the edge 28 is in contact with the active material layer or separator, it can cause separation of the negative electrode active material layers 25a and 25b and breakage of the separator 17 due to pressure applied when the electrode assembly is wound. However, according to the above-described structure, the edge 28 is not only positioned inside the circle 23 with the predetermined radius but also disposed in the groove 22. It is thus possible to suppress the edge 28 from coming into contact with the negative electrode sheet 15, the positive electrode sheet 16, and the separator 17 in a more reliable manner.

The width and depth of the groove 22 are not particularly limited if the edge 28 of the negative electrode current collector sheet 24 can be inserted into the groove 22. The width of the groove 22 is preferably about 50 to 500 µm, considering that the diameter of the conductive winding core 14 is set to approximately a few millimeters to reduce battery size and that the thickness of the negative electrode current collector sheet 24 is usually approximately 10 to 20 µm.

The second flat portion 21 is opposite to the first flat portion 20 with the axis of the conductive winding core 14 therebetween. The first flat portion 20 of the conductive winding core 14 is opposite to the second flat portion 21, not the curved portion 18. This arrangement allows the conductive winding core 14 and the negative electrode current collector sheet 24 to be joined with good workability and allows the joints 27 to be formed with good accuracy for the following reasons.

When the diameter of the conductive winding core 14 is set to approximately a few millimeters to reduce battery size, the first flat portion 20 and the negative electrode current collector sheet 24 are joined by the above-mentioned resistance welding. According to resistance welding, the conductive winding core 14 is placed on the flat second resistance-welding electrode 36 (see FIG. 3), as described above. Thus, by arranging the second flat portion 21 opposite to the first flat portion 20 with the axis of the conductive winding core 14 therebetween, the conductive winding core 14 can be stably held on the second resistance-welding electrode 36. As a result, the workability of the resistance welding is significantly improved, and the welding strength of the conductive winding core 14 and the negative electrode current collector sheet 24 can be stabilized.

Also, the thickness of the negative electrode current collector sheet 24 is significantly smaller than the diameter of the conductive winding core 14. Hence, if the amount of current in resistance welding is excessive, the welded spot may break, thereby creating a sharp section. Also, such a sharp section of the negative electrode current collector sheet 24 can cause the negative electrode active material layers 25a and 25b to separate or cause the separator 17 to break. On the other hand, if the amount of current in resistance welding is insufficient, the bonding strength of the joints 27 becomes insufficient. However, since the conductive winding core 14 has the second flat portion 21, the amount of current passed between the two resistance-welding electrodes 35 and 36 can be stabilized, and variation in welding current can be suppressed. As a result, the accuracy in forming the joints 27 is significantly improved, and the welding strength of the conductive winding core 14 and the negative electrode current collector sheet 24 can be stabilized.

The second flat portion 21 can be formed, for example, by casting the conductive winding core 14 using a mold which has a portion corresponding to the shape of the second flat portion 21. Also, the second flat portion 21 may be formed by cutting off a part of the circumference of the columnar conductive winding core.

In the wound electrode assembly 12, since the conductive winding core 14 has the first flat portion 20 and the second flat portion 21, gaps are formed between the circumference of the conductive winding core 14 and the negative electrode sheet 15, the positive electrode sheet 16, and the separator which are wound around the conductive winding core 14. These gaps facilitate the penetration of the non-aqueous electrolyte into the wound electrode assembly 12. It is thus possible to suppress battery deterioration due to decomposition, volatilization, etc. of the non-aqueous electrolyte.

The wound electrode assembly 12 is produced by joining the first flat portion 20 of the conductive winding core 14 and the exposed portion 26 of the negative electrode current collector sheet 24, and winding the negative electrode sheet 15 around the conductive winding core 14 together with the separator 17 and the positive electrode sheet 16. After the negative electrode sheet 15, the positive electrode sheet 16, and the separator 17 have been wound, the outermost portion of the wound electrode assembly 12 is fixed with an insulating tape made of polypropylene or the like. Further, an end 32 of the conductive winding core 14 is inserted through the insulating gasket 13, and the other end is fitted with an insulating cover 34. The wound electrode assembly 12 thus produced is placed into the battery case 11, and a non-aqueous electrolyte is injected into the battery case 11. An open end 31 is then crimped and sealed to obtain the lithium ion battery 10 as illustrated in FIG. 1.

Referring again to FIG. 1, in the lithium ion battery 10, the end 32 of the conductive winding core 14 is exposed from the battery case, and serves as the negative electrode terminal. The conductive winding core 14 is electrically connected to the negative electrode sheet 15 at the joints 27, as described above. This structure eliminates the need for a lead to connect the negative electrode current collector sheet 24 and the negative electrode terminal, thereby making it possible to decrease the number of parts and further reduce battery size. The polarity of the electrode sheet to be connected to the conductive winding core 14 is not limited to the one shown in FIG. 1 and FIG. 2, and the positive electrode sheet may be connected to the conductive winding core 14. In this case, the conductive winding core is used as the positive electrode terminal.

The end 32 of the conductive winding core 14 is inserted through the ring-like insulating gasket 13. The open end 31 of the battery case 11 is crimped, so that the opening of the battery case 11 is sealed with the insulating gasket 13.

The positive electrode sheet 16 is wound around the outermost portion of the wound electrode assembly 12. The positive electrode current collector sheet 29 of the positive electrode sheet 16 at the outermost portion is pressed against the inner surface of the battery case 11. As a result, the battery case 11 and the positive electrode current collector sheet 29 are electrically connected. The outer surface of the battery case 11 is fitted with the insulating cover 34, and the portion not fitted with the insulating cover 34 (the crimped/sealed portion) is used as the external positive electrode terminal of the lithium ion battery 10. The other end of the conductive winding core 14 is fitted with the insulating cap 33 to prevent a short circuit between itself and the battery case 11.

The battery case 11 can be a case made of silver, copper, iron, nickel, palladium, gold, platinum, aluminum, stainless steel, or the like. While the thickness of the battery case 11 can be set as appropriate, it is preferably 50 to 500 µm, and more preferably 100 to 300 µm, in consideration of the strength and the machinability. The diameter of the battery case 11 is preferably 1 to 100 mm, and more preferably 0.1 to 50 mm, in terms of providing high strength and good machinability at the same time.

The material of the insulating gasket 13 can be selected as appropriate, in view of the stability with respect to the non-aqueous electrolyte and heat resistance. Specifically, various polymers such as polypropylene, polyethylene, polyphenylene sulfide, polyetherketone, polyamides, polyimides, liquid crystal polymer, and copolymers containing perfluoroalkoxyethylene can be used singly or as a mixture of two or more kinds. Also, such polymers can be used in combination with a filler such as an inorganic fiber. The insulating gasket can be coated with a sealant to increase the gas tightness of the battery.

The negative electrode sheet 15 comprises the negative electrode current collector sheet 24 and the negative electrode active material layers 25a and 25b formed on both sides thereof. The negative electrode current collector sheet 24 is shaped like a strip which is suitable for winding. Also, the negative electrode current collector sheet 24 is preferably made of metal foil. The material of the negative electrode current collector sheet 24 is, for example, copper, or a copper alloy. The material of the negative electrode current collector sheet 24 is preferably the same as the material of the conductive winding core 14, in terms of suppressing loss in passing current from the negative electrode sheet 15 to the conductive winding core 14. The negative electrode active material layers 25a and 25b indude a negative electrode active material, and, if necessary, further contain a conductive agent, a binder, etc. Examples of negative electrode active materials include various natural and artificial graphites, silicide, silicon oxides, lithium metal, and various alloy materials. Examples of binders indude polytetrafluoroethylene, polyvinylidene fluoride, and styrene-butadiene rubber. Examples of conductive agents include acetylene black, ketjen black ®, and various graphites.

The positive electrode sheet 16 comprises the positive electrode current collector sheet 29 and the positive electrode active material layers 30a and 30b formed on both sides thereof. The positive electrode current collector sheet 29 is shaped like a strip which is suitable for winding. Also, the positive electrode current collector sheet 29 is preferably made of metal foil. The material of the positive electrode current collector sheet 29 is, for example, aluminum, an aluminum alloy, stainless steel, or titanium. When the positive electrode current collector sheet is joined to the conductive winding core, the material of the positive electrode current collector sheet is preferably the same as the material of the conductive winding core, in terms of suppressing loss in passing current from the positive electrode sheet to the conductive winding core. The positive electrode active material layers 30a and 30b indude a positive electrode active material, and, if necessary, further contain a conductive agent, a binder, etc. Examples of positive electrode active materials indude lithium-containing transition metal oxides such as lithium cobaltate, lithium nickelate, and lithium manganate, and various known positive electrode active materials. Examples of binders and conductive agents include those listed as binders and conductive agents contained in the negative electrode sheet 15.

The non-aqueous electrolyte can be, for example, one in which a supporting salt such as a lithium salt is dissolved in a non-aqueous solvent. As the lithium saft, for example, LiPF₆ and LiBF₄ can be used singly or in combination of two or more kinds. As the non-aqueous solvent, carbonic add esters such as ethylene carbonate, dimethyl carbonate, diethyl carbonate, and ethyl methyl carbonate can be used singly or in combination of two or more kinds. The form of the non-aqueous electrolyte is not limited and can be selected from liquid, gel, solid (polymer solid electrolyte), and the like.

The separator 17 can be a microporous thin film, woven fabric, non-woven fabric, or the like, and is preferably one with a high ion permeability, a suitable mechanical strength, and an insulating property. Also, it may be a mono-layer film made of one material or may be a composite film or a multi-layer film made of two or more materials. Examples of the material of the separator 17 include polyolefins such as polypropylene and polyethylene. In particular, a microporous, thin polyolefin film is suitable as the separator of a lithium ion battery, since it has good durability and the so-called shut-down function of the pores being dosed when the temperature reaches a certain temperature or more. The thickness of the separator is usually 10 to 300 µm, but it is preferably 40 µm or less, and more preferably 5 to 30 µm.

In the above description, the lithium ion battery is taken as an example, but the wound electrode assembly of this embodiment is not to be construed as being applicable only to lithium ion batteries. The invention is applicable to not only non-aqueous electrolyte batteries but also batteries using alkaline electrolytes. In this case, the electrode materials and the composition of the alkaline electrolyte are not particularly limited, and known materials and compositions can be selected as appropriate.

### [Example]

The invention is hereinafter described more specifically by way of an Example, but the scope of the invention is not to be construed as being limited to the following Example.

### [Example 1]

The lithium ion battery 10 illustrated in FIG. 1 and FIG. 2 was produced in the following procedure.

### (1) Preparation of negative electrode sheet 15

A negative electrode mixture slurry was prepared by dispersing an artificial graphite powder (volume mean particle size 20 µm) serving as a negative electrode active material, styrene-butadiene rubber (SBR), and carboxymethyl cellulose (CMC) in water. The artificial graphite powder, SBR, and CMC were mixed in a mass ratio of 98:1:1. The negative electrode mixture slurry was applied onto a copper foil (thickness 12 µm, width 13 mm, length 28 mm) serving as the negative electrode current collector sheet 24, and dried with a drier to remove the water from the slurry. It should be noted that the negative electrode mixture slurry was applied onto both sides of a predetermined area of the negative electrode current collector sheet 24, and the amount of the dried negative electrode active material adhering to both sides of the predetermined area was 200 g per 1 m² of the negative electrode current collector sheet 24. The negative electrode sheet 15 thus obtained was rolled with a roll press to adjust the thickness of the predetermined area (double-coated area) of the negative electrode sheet 15 to 0.14 mm. The negative electrode active material layers 25a and 25b were formed from one end of the negative electrode current collector sheet 24 in the width direction thereof to the other end. Also, one end of the negative electrode current collector sheet 24 in the length direction thereof was provided with the exposed portion 26 where the negative electrode active material layer was not formed on either side thereof. Further, an area of the negative electrode current collector sheet 24 which was adjacent to the exposed portion 26 and to be positioned on the inner side when wound was provided with the negative electrode active material layer 25a, and this area had a length corresponding to approximately one tum of the negative electrode current collector sheet 24 wound around the conductive winding core 14. In the remaining area of the negative electrode current collector sheet 24, the negative electrode active material layers 25a and 25b were formed on both sides.

### (2) Preparation of positive electrode sheet 16

A positive electrode mixture slurry was prepared by dispersing lithium cobaltate serving as a positive electrode active material, acetylene black, and polyvinylidene fluoride (PVDF) in N-methylpyrrolidone (NMP). The lithium cobaltate, acetylene black, and PVDF were mixed in a mass ratio of 90:5:5. The positive electrode mixture slurry was applied onto an aluminum foil (thickness 20 µm, width 12 mm, length 33 mm) serving as the positive electrode current collector sheet 29, and dried with a dryer to remove the NMP from the slurry. It should be noted that the positive electrode mixture slurry was applied onto both sides of a predetermined area of the positive electrode current collector sheet 29, and the amount of the dried positive electrode active material adhering to both sides of the predetermined area was 450 g per 1 m² of the positive electrode current collector sheet 29. The positive electrode sheet 16 thus obtained was rolled with a roll press to adjust the thickness of the predetermined area (double-coated area) of the positive electrode sheet 16 to 0.16 mm. The positive electrode active material layers 30a and 30b were formed from one end of the positive electrode current collector sheet 29 in the width direction thereof to the other end. Also, at one end of the positive electrode current collector sheet 29 in the length direction thereof, an area of the positive electrode current collector sheet 29 to be positioned on the outer side when wound was provided with the positive electrode active material layer 30b, and this area had a length corresponding to approximately one tum of the positive electrode current collector sheet 29 wound around the conductive winding core 14. In the remaining area of the positive electrode current collector sheet 29, the positive electrode active material layers 30a and 30b were formed on both sides.

### (3) Production of wound electrode assembly 12

A columnar stainless steel was used as the conductive winding core 14. As illustrated in FIG. 2, the outer shape of the conductive winding core 14 in cross-section includes: the curved portion 18 along the circle 23 with the predetermined radius; the first flat portion 20 having such a shape that a part of the circle 23 is cut; and the second flat portion 21 having such a shape that a part of the circle 23 is cut, the second flat portion 21 being opposite to the first flat portion 20. The circle 23 had a diameter of 1 mm. Also, the groove 22 had a width of 100 µm and a depth of 200 µm.

Referring to FIG. 3, the other end of the conductive winding core 14 was fitted with the insulating gasket 13 made of a tetrafluoroethylene-perfluoroalkylvinylether copolymer. Thereafter, the exposed portion 26 of the negative electrode current collector sheet 24 was resistance welded to the first flat portion 20 of the conductive winding core 14. Specifically, as illustrated in FIG. 3, first, the exposed portion 26 of the negative electrode current collector sheet 24 was placed on the first flat portion 20 of the conductive winding core 14. Subsequently, the first resistance-welding electrode 35 made of copper and the second resistance-welding electrode 36 made of copper were disposed so as to face each other with the exposed portion 26 and the conductive winding core 14 therebetween. At this time, the first resistance-welding electrode 35 was brought into contact with a point of the surface of the negative electrode current collector sheet 24, while the second resistance-welding electrode 36 was brought into contact with the surface of the second flat portion 21 of the conductive winding core 14. In this way, the exposed portion 26 was resistance welded to the first flat portion 20 of the conductive winding core 14 at four locations along the axial direction 19 of the conductive winding core 14.

IP-205A, available from Miyachi Corporation, was used as the resistance welding machine, and one welding cycle was performed at a welding current of 500 A. The first resistance-welding electrode 35 had a tip diameter of ϕ0.3 mm. The pressure applied to the fip of the first resistance-welding electrode 35 was 350 kgf/cm². The locations to which such a resistance welding was performed are illustrated in FIG. 2 and FIG. 3.

Subsequently, the edge 28 of the exposed portion 26 of the negative electrode current collector sheet 24 was pushed into the groove 22 with a pushing plate. Thereafter, the positive electrode sheet 16 covered with the polyethylene separator (micro-porous film) 17 with a thickness of 0.016 µm was disposed over the negative electrode sheet 15 resistance welded to the conductive winding core 14. Then, using a winding machine, the negative electrode sheet 15, the positive electrode sheet 16, and the separator 17 were wound as illustrated in FIG. 2. After the winding, the outermost portion was fixed with a polypropylene tape to produce the wound electrode assembly 12.

### (4) Preparation of non-aqueous electrolyte

A solvent mixture containing ethylene carbonate, propylene carbonate, and diethyl carbonate in a mass ratio of 10:10:80 was used as the non-aqueous solvent. LiPF₆ was dissolved in this solvent mixture to obtain a non-aqueous electrolyte with a LiPF₆ concentration of 1.0 mol/L.

### (5) Production of pin-shaped lithium ion battery

The wound electrode assembly 12 was inserted into an aluminum cylinder serving as the battery case 11, and left at 100°C in a vacuum to dry the interior thereof. Thereafter, 100 mg of the above-mentioned non-aqueous electrolyte was injected into the battery case 11. Lastly, the opening of the cylinder was crimped and sealed with the insulating gasket 13 therebetween, to obtain a lithium ion secondary battery with a height of 20 mm and a diameter of 4 mm.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The invention can be used in the field of power sources for various electronic devices, in particular, in the field of power sources for small-sized, portable electronic devices.

## Claims

1. A wound electrode assembly comprising:
a positive electrode sheet comprising a positive electrode current collector sheet and a positive electrode active material layer supported on a surface of the positive electrode current collector sheet;
a negative electrode sheet comprising a negative electrode current collector sheet and a negative electrode active material layer supported on a surface of the negative electrode current collector sheet;
a separator interposed between the positive electrode sheet and the negative electrode sheet; and
a columnar conductive winding core around which a laminate of the positive electrode sheet, the negative electrode sheet, and the separator is wound,
the surface of the positive electrode sheet or the negative electrode sheet having an exposed portion, where the active material layer is not supported, at an end portion on the winding center side,
the outer shape of the conductive winding core in cross-section including: a first flat portion having such a shape that a part of a circle with a predetermined radius is cut; and a curved portion extending continuously from the first flat portion along the circle,
the exposed portion being joined to the first flat portion at a plurality of locations along the axial direction of the conductive winding core, and
an edge of the exposed portion being positioned on the first flat portion side inside the circle.

2. The wound electrode assembly in accordance with daim 1, wherein in the cross-section of the conductive winding core, the joints of the exposed portion and the first flat portion are positioned inside the circle.

3. The wound electrode assembly in accordance with daim 1, wherein the conductive winding core has a groove in the first flat portion, the groove extends in the axial direction, and the edge of the exposed portion is disposed in the groove.

4. The wound electrode assembly in accordance with daim 1, wherein the outer shape of the conductive winding core in cross-section further includes a second flat portion having such a shape that a part of the circle is cut, the second flat portion being opposite to the first flat portion.

5. The wound electrode assembly in accordance with daim 1, wherein the conductive winding core has a largest diameter of 0.5 to 10 mm.

6. A battery comprising:
a substantially cylindrical battery case with a dosed end;
the wound electrode assembly of daim 1 contained in the battery case; and
a non-aqueous electrolyte contained in the battery case.

7. The battery of daim 6, wherein an end of the conductive winding core is exposed from the battery case to form an external terminal.
